# FASCICULE DE BREVET EUROPEEN

(11) **EP 0 636 510 B1**
(45) Date de publication et mention de la délivrance du brevet: **23.09.1998**
(21) Numéro de dépôt: 94401527.0
(22) Date de dépôt: 04.07.1994
(51) Int. Cl.: B60N 2/22, F16H 1/32

(54) **Articulation pour siège de véhicule**
Gelenkbeschlag für Fahrzeugsitz
Hinge fitting for vehicle seat

(30) Priorité: 26.07.1993 FR 9309188
(43) Date de publication de la demande: 01.02.1995
(73) Titulaire: BERTRAND FAURE AUTOMOBILE "B.F.A.", F-91300 Massy (FR)
(72) Inventeur: Droulon, Georges, St. Georges des Groseillers 61100 Flers (FR)
(74) Mandataire: Madeuf, René Louis

(56) Documents cités:
- EP-A- 0 063 510
- EP-A- 0 098 952
- EP-A- 0 505 229
- FR-A- 2 578 601

## Description

Les sièges automobiles de même que les sièges pour les véhicules ferroviaires, les avions, etc, comportent maintenant des dispositifs permettant le réglage de la position longitudinale du siège, mais également pour la plupart de ces sièges, d'autres dispositifs permettant le réglage de l'inclinaison du dossier et parfois même des dispositifs de réglage d'inclinaison de la têtière placée au sommet du dossier du siège.

Or, ces mécanismes, qui doivent présenter une résistance considérable aux efforts de torsion divers auxquels ils sont soumis, doivent rester parfaitement immobilisés lors d'un choc latéral ou frontal du véhicule considéré afin de maintenir le passager du siège dans de bonnes conditions.

On a maintenant mis au point des mécanismes d'articulation à mouvement orbital sans satellite qui fonctionnent parfaitement et présentent une grande résistance mais, pour améliorer cette dernière qualité, il est nécessaire d'assurer un blocage supplémentaire ; c'est l'objet de l'articulation concernée par la présente invention qui est du type à mouvement orbital sans satellite et qui assure un blocage supplémentaire en utilisant une denture réalisée sur le bord de la coupelle liant les deux flasques, cette denture coopérant avec des semi-découpes dentées du flasque mobile.

La technique antérieure a cependant fait connaître le document EP-A-0 098 952 qui montre une disposition à deux flasques allongés où la denture supplémentaire n'est qu'un double de la denture classique, ce qui représente une articulation à deux étages, mais deux étages liés l'un à l'autre qui ont ainsi le même mouvement, le flasque mobile portant deux dentures intérieures.

On connaît également par le document FR-A-2 578 601 une articulation pour siège de véhicule comportant un flasque fixe solidaire d'une armature de siège et portant une denture extérieure, un flasque mobile solidaire d'une autre armature du siège et portant une denture intérieure, cette denture intérieure coopérant avec la denture extérieure du flasque fixe, une cuvette à deux épaulements assurant au flasque mobile un mouvement orbital provoquant le mouvement angulaire de l'articulation, et une coupelle liée au flasque fixe et maintenant le flasque mobile contre le flasque fixe.

La disposition ci-dessus peut être considérée comme l'état de la technique le plus proche et a été utilisée pour énoncer le préambule de la revendication annexée.

Conformément à l'invention, le bord de la coupelle porte une denture intérieure qui coopère avec des dentures extérieures portées par des semi-découpes du flasque mobile, la hauteur des dentures du bord de la coupelle et des dentures des semi-découpes étant égale au double de l'excentration e prévue entre les deux épaulements de la cuvette.

Diverses autres caractéristiques de l'invention ressortent d'ailleurs de la description détaillée qui suit.

Une forme de réalisation de l'objet de l'invention est représentée, à titre d'exemple non limitatif, au dessin annexé.

La fig. 1 est une vue de face d'un flasque mobile maintenu contre un flasque fixe par une coupelle, dentée extérieurement, pour coopérer avec des semi-découpes dentées solidaires de protubérances de fixation du flasque mobile sur l'armature du dossier du siège.

La fig. 2 est une coupe diamétrale suivant la ligne II-II de la fig. 1.

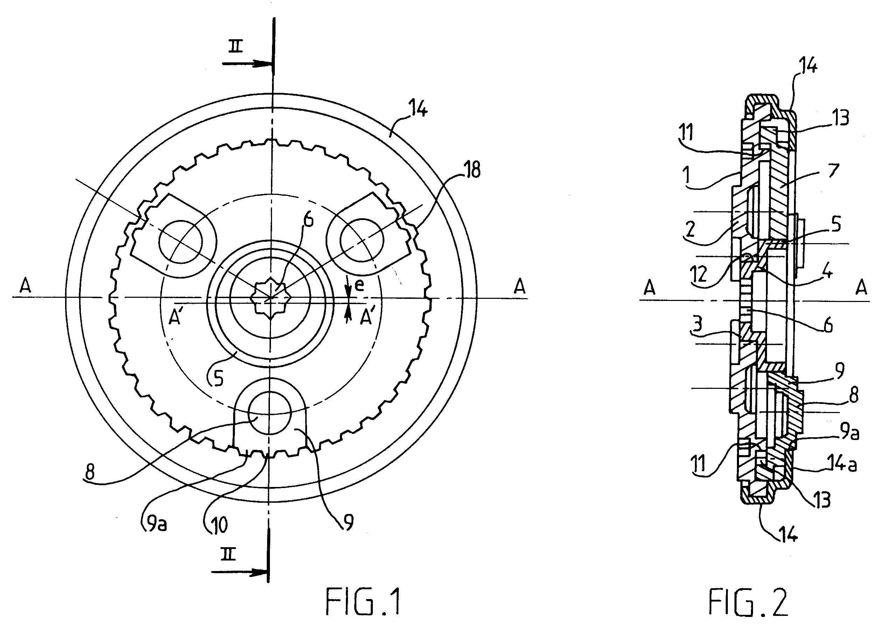

Comme on peut le voir à la fig. 2, un flasque fixe 1 comporte, disposés à 120° les uns des autres, des bossages 2 permettant la fixation de ce flasque fixe 1 sur l'armature de l'assise d'un siège.

Le flasque fixe 1 est percé d'un orifice central 12 recevant un premier épaulement intérieur 4 d'une cuvette 3 qui comporte également un deuxième épaulement 5 excentré d'une distance "e" par rapport à l'épaulement intérieur 4 (fig. 1). L'épaulement 5 porte un flasque mobile 7.

La cuvette 3 est percée d'un canal central 6 en étoile, afin de pouvoir y faire pénétrer un arbre cannelé, non représenté, assurant la commande en rotation de l'articulation.

Comme cela est connu, le flasque fixe 1 présente intérieurement une denture circulaire 11 sur laquelle est montée la denture intérieure 13 du flasque mobile 7.

Le flasque mobile 7 est maintenu sur le flasque fixe 1 par l'intermédiaire d'une coupelle 14 sertie sur le pourtour extérieur du flasque fixe 1 et présentant un rabat circulaire 14a maintenant le flasque mobile 7 contre le flasque fixe 1 tout en permettant la rotation du flasque mobile 7 par rapport au flasque fixe 1 par roulement de la denture intérieure 13 sur la denture circulaire 11.

Le flasque mobile 7 présente des semi-découpes 9 disposées à 120° les unes des autres et comportant, dans leur zone supérieure 9a, chacune une denture 10.

Le flasque mobile 7 comporte également d'autres semi-découpes 8 permettant la fixation aisée du flasque mobile 7 sur l'armature du dossier du siège.

Finalement, on remarque que le pourtour extérieur du rabat circulaire 14a de la coupelle 14 présente une denture 18 destinée à coopérer avec les dentures 10 des semi-découpes 9.

Lorsqu'on désire régler l'inclinaison du dossier du siège considéré par rapport à l'assise, on entraîne en rotation la pièce en cuvette 3 par l'intermédiaire d'un arbre cannelé comme indiqué ci-dessus et le flasque mobile 7 est alors entraîné en rotation du fait de l'excentration en provoquant ainsi un mouvement orbital du flasque 7, les dentures 13 du flasque mobile 7 roulant sur les dentures 11 du flasque fixe 1. Ce mouvement orbital assure le dégagement de l'une des dentures 10 des semi-découpes 9, de la denture fixe 18 de la coupelle 14 mais amène progressivement une autre semi-découpe 9 en contact, par sa denture 10, avec la denture fixe 18 puis, au fur et à mesure du mouvement orbital, le passage sur la troisième semi-découpe 9 et ainsi de suite jusqu'au moment où le dossier du siège est en position désirée.

A ce moment, l'une des dentures 10 a pénétré dans la denture 18 en assurant un blocage parfait du flasque mobile par rapport au flasque fixe puisque la coupelle est solidaire de ce dernier.

Il y a lieu de signaler que la hauteur de la denture 18 ainsi que des dentures 14 des semi-découpes 9 est égale au double de l'excentration e (voir fig. 1).

Cette excentration est visible d'ailleurs à la fig. 1 du fait du décalage entre les épaulements 4 et 5 de la pièce en cuvette 3, l'épaulement 4 étant centré sur l'axe principal A-A et l'épaulement 5 étant centré sur l'axe A'-A'.

Les fig. 1 et 2 représentent une articulation dite "ronde" car les deux flasques 1 et 7 sont circulaires, mais bien entendu, cette articulation pourrait être une articulation appelée "demi-ronde" c'est-à-dire avec un flasque 7 circulaire et un flasque 1 demi-circulaire muni d'une aile fixée directement sur un élément du siège.

## Revendications

1. Articulation pour siège de véhicule comportant un flasque (1) fixe solidaire d'une armature de siège et portant une denture extérieure (11), un flasque mobile (7) solidaire d'une autre armature du siège et portant une denture intérieure (13), cette denture intérieure (13) coopérant avec la denture extérieure (11) du flasque fixe (1), une cuvette (3) à deux épaulements (4, 5) assurant au flasque mobile (7) un mouvement orbital provoquant le mouvement angulaire de l'articulation, et une coupelle (14) liée au flasque fixe et maintenant le flasque mobile (7) contre le flasque fixe (1), caractérisée en ce que le bord de cette coupelle porte une denture intérieure (18) qui coopère avec des dentures extérieures (10) portées par des semi-découpes (9) du flasque mobile (7), la hauteur des dentures (18) du bord de la coupelle (14) et des dentures (10) des semi-découpes (9) étant égale au double de l'excentration e prévue entre les deux épaulements (4, 5) de la cuvette (3).

## Claims

1. A hinge fitting for vehicule seat comprising a fixed flange (1) rigidly connected to one framework of a seat and carrying an outer toothing (11), a mobile flange (7) rigidly connected to another framework of the seat and carrying an inner toothing (13), this inner toothing (13) cooperating with the outer toothing (11) of the fixed flange (1), a cup member (3) having two shoulders (4, 5) ensuring to the mobile flange an orbital movement causing the angular movement of the hinge fitting, and a dish member (14) connected to the fixed flange and maintaining the mobile flange (7) against the fixed flange (1), characterized in that the edge of this dish member carries an inner toothing (18) that cooperates with outer toothings (10) carried by semi-cut portions (9) of the mobile flange (7), the height of the toothings (18) of the edge of the dish member (14) and toothings (10) of the semi-cut portions (9) being equal to twice the off-center e provided between the two shoulders (4, 5) of the cup member (3).

## Patentansprüche

1. Gelenk für Fahrzeugsitz mit einem mit einem Sitzgerüst fest verbundenen und eine Aussenverzahnung (11) tragenden Teller (1), einem mit einem anderen Gerüst des Sitzes fest verbundenen und eine Innenverzahnung (13) tragenden bewegbaren Teller (7), wobei diese Innenverzahnung (13) mit der Aussenverzahnung (11) des ortsfesten Tellers (1) zusammenwirkt, einer Schale (3) mit zwei dem bewegbaren Teller (7) eine die Winkelbewegung des Gelenkes verursachende orbitale Bewegung gewährleistenden Schultern (4,5), und einer mit dem ortsfesten Teller verbundene und den bewegbaren Teller (7) an dem ortsfesten Teller (1) haltenden Kapsel (14), dadurch gekennzeichnet, dass der Rand dieser Kapsel eine Innenverzahnung (18) trägt, die mit von Halbausschnitten (9) des bewegbaren Tellers (7) getragenen Aussenverzahnungen (10) zusammenwirkt, wobei die Höhe der Verzahnungen (18) des Randes der Kapsel (14) und der Verzahnungen (10) der Halbausschnitte (9) gleich dem Doppelten der zwischen den beiden Schultern (4, 5) der Schale (3) vorgesehenen Exzentrizität e ist.
